# FASCICULE DE BREVET EUROPEEN

(11) **EP 0 334 912 B1**
(45) Date de publication et mention de la délivrance du brevet: **24.03.1993**
(21) Numéro de dépôt: 88907704.6
(22) Date de dépôt: 08.09.1988
(51) Int. Cl.: G01B 5/00

(54) **PROCEDE ET SUPPORT GLISSANT POUR UN PROFILOMETRE**
PROZEDUR UND GLEITBARE UNTERSTÜTZUNG FÜR EIN PROFILMEPINSTRUMENT
METHOD AND SLIDING SUPPORT FOR A PROFILOMETER

(30) Priorité: 09.09.1987 FR 8712582
(43) Date de publication de la demande: 04.10.1989
(73) Titulaire: INSTITUT SUPERIEUR D'ETAT DE SURFACE, F-51000 Chalons-sur-Marne (FR); BIELLE, Jacques, F-51000 Chalons-sur-Marne (FR)
(72) Inventeur: BIELLE, Jacques, F-51000 Châlons-sur-Marne (FR)
(74) Mandataire: Gérardin, Robert Jean René
(86) Numéro de dépôt international: FR8800443
(87) Numéro de publication internationale: WO8902571

(56) Documents cités:
- DE-A- 3 441 426
- FR-A- 2 094 282
- FR-A- 2 265 065
- GB-A- 1 581 249
- GB-A- 2 028 521
- US-A- 3 377 711

## Description

La présente invention a pour objet un procédé et un dispositif de déplacement par glissement, sur une surface de référence, d'un support mobile pouvant recevoir des accessoires tels qu'une pièce, un capteur ou un outil, permettant d'exercer sur ce support mobile des efforts répartis, orientés de bas en haut.

On sait que tout déplacement d'un mobile dans l'espace est soumis à trois écarts géométriques de son mouvement: le lacet, le tangage, le roulis.

Des solutions connues, faisant partie de l'art antérieur, proposent d'utiliser deux glissières superposées à mouvements croisés qui provoquent la superposition de ces trois écarts géométriques et leur intéractions; de plus, un tel dispositif est tributaire des tolérances d'usinage et des vibrations respectives de chaque glissière se propageant dans le système de captage, d'où l'existence de défauts qui ne peuvent être que partiellement éliminés. Dans le but d'améliorer, néanmoins, les performances des dispositifs existants, on en est venu à concevoir des produits de grande dimension, de masse élevée, de façon à limiter les effets néfastes des vibrations, par l'inertie même du dispositif. On comprend qu'il faille, de plus, usiner ces pièces de grande taille avec une grande précision: ce qui conduit à des réalisations sans rapport avec les résultats obtenus, pour un prix de revient démesuré.

Une autre solution connue, décrite dans le brevet anglais **GB-A-1.581.249**, consiste à faire déplacer le mobile par rapport à une surface, sans qu'il soit en contact avec celle-ci, en recourant à un système à coussins d'air. Là encore, Les vibrations engendrées par ces systèmes à fuite d'air contrôlée rendent cette solution inadaptée à certaines applications particulières. Le film d'air présentant toujours une élasticité, il constitue un amplificateur de vibrations.

Par ailleurs, la solution la plus évidente consiste à faire déplacer le mobile par glissement sur une surface de référence, mais, alors, la pression de contact est proportionnelle à la masse, ce qui élimine toute reproductibilité des résultats. En effet, tout mobile, pour partir en glissement, doit être tiré ou pousse par un effort supérieur à celui qu'il faut lui appliquer pour le maintenir en déplacement de frottement.

La différence de valeur d'effort, appliquée au mobile entre le glissement et le frottement, conditionne sa position géométrique dans un référentiel. De plus, ces frottements provoquent des variations dimensionnelles par variation de la température ; on constate également une autre conséquence directe qui influe sur la qualité du déplacement, en particulier lors du départ et de l'arrêt du mobile, c'est la dissymétrie dans la répartition des charges. Enfin, il existe un phénomène d'usure prématurée des surfaces de glissement en contact dans ce type de réalisation. De plus, il faut, pour faire déplacer le mobile, le soumettre à un mouvement aussi régulier que possible, ce qui n'est jamais le cas.

Les systèmes de déplacement à moteurs électriques, avec axe entraînant une vis tournant dans un écrou à billes, rajoutent aux défauts premiers d'autres défauts qui, cumulés, rendent impossibles les mesures de haute précision. Dans certaines applications, de mesure d'état de surface par exemple, quel que soit le type de capteur placé sur le mobile support, la dispersion des mesures sur une trajectoire de profil peut atteindre, en **Z**, une valeur de 5 micromètres.

A titre d'exemple, on peut citer des valeurs d'espacement moyen des irrégularités dans différents types d'usinage, et des valeurs d'espacement **(e)** et de profondeur **(p)** en micromètres :

| | **Espacement** | **Profondeur** |
|---|---|---|
| **Tournage** | **60<e<280** | **1,5<p<15** |
| **Rectification** | **7<e< 180** | **0,5 <p<4** |
| **Fraisage** | **17<e<400** | **3 <p<4** |

On constate que ces valeurs requièrent une grande précision de mesurage, plus particulièrement suivant l'axe des **Z**. Actuellement les systèmes de déplacement, utilisant deux tables à mouvements croisés, entraînés par des moteurs pas à pas, conduisent à des précisions de mesure de l'ordre de 5 micromètres, incompatibles avec les mesures de profondeur des irrégularités des surfaces techniques. D'ailleurs, la norme ISO TC 57 utilise le terme de micro-rugosité lorsque la profondeur des irrégularités est inférieure à 0,5 micromètres.

On connaît déjà un dispositif de mesure correspondant au préambule de la revendication 1 (brevet des Etats Unis d'Amérique **US-A-3.377711**). Le support mobile se déplace su des rails par l'intermédiaire de billes de roulement, alors qu'il est supporté latéralement par des vérins dont l'extrémité de la tige est munie d'un moyen de roulement et dont le débattement est limité par des butées de roulement, solidaires du support, venant prendre appui sous les rails. Un tel dispositif n'assure pas un déplacement de haute précision par rapport à une surface de référence, mais uniquement une suppression temporaire de pression sur les billes de roulement lors des changements de position du support et, cela, pour éviter la déformation des rails de guidage qui contituent la référence géométrique du déplacement.

La présente invention a pour but de remédier à ces inconvénients. Cette invention, telle qu'elle est caractérisée dans les revendications, résout le problème consistant à créer un dispositif facilitant le déplacement par glissement, sur une surface de référence plane, d'un support équipé d'un accessoire, en réduisant la pression dudit support sur ladite surface de référence à une valeur juste suffisante au strict maintien du contact, afin de ramener à une valeur minimum la différence entre l'effort de glissement et de frottement pour minimiser les écarts géométriques de position dans le référentiel de déplacement, c'est-à-dire l'incertitude de captage de déplacement en **X** ou en **Y**, ou en **X** et **Y** simultanément.

Les avantages obtenus, grace à cette invention consistent essentiellement en ceci qu'elle permet d'obtenir
- une faible charge sur les surfaces de glissement dont il resulte, une diminution de l'effort de démarrage pour l'amener vers la valeur de l'effort de glissement et un arrêt plus précis en position et, en conséquence, une minimisation des écarts de position géométrique du capteur, au départ et à l'arrêt de la table, d'où une meilleure réponse.
- une diminution de l'échauffement des pièces en mouvement, donc une plus faible déformation thermique des géométries, d'où une meilleure quatité des déplacements.
- une réduction du couple de rotation appliqué aux vis, donc un minimun d'incertitude de position des éléments, tout en utilisant des moteurs de plus faible capacité.
- une grande précision de guidage.
- la possibilité de mesurer les écarts géométriques de profil tels que : écart de forme, ondulation, rugosité et, par déplacement **X-Y**, les courbes de niveau des surfaces.

D'autres avantages et caractéristiques apparaîtront à la lecture de la description des modes de réalisation particuliers non limitatifs qui va suivre en regard des figures annexées qui représentent :
- Figure 1 :: Une vue, en perspective, d'un dispositif selon l'invention ;
- Figure 2 :: La mise en place, sur le support mobile, d'une table à déplacement micrométrique pour la mesure d'état géométrique de surface;
- Figure 3 :: Une vue latérale du dispositif complet avec platine de rotation pour la mesure d'état de surface;
- Figure 4 :: La courbe des résultats obtenus avec le dispositif selon l'invention ;
- Figure 5 :: Le dispositif avec support mobile tournant, en coupe longitudinale ;
- Figure 6 :: Le dispositif avec support mobile tournant, en vue de dessus.

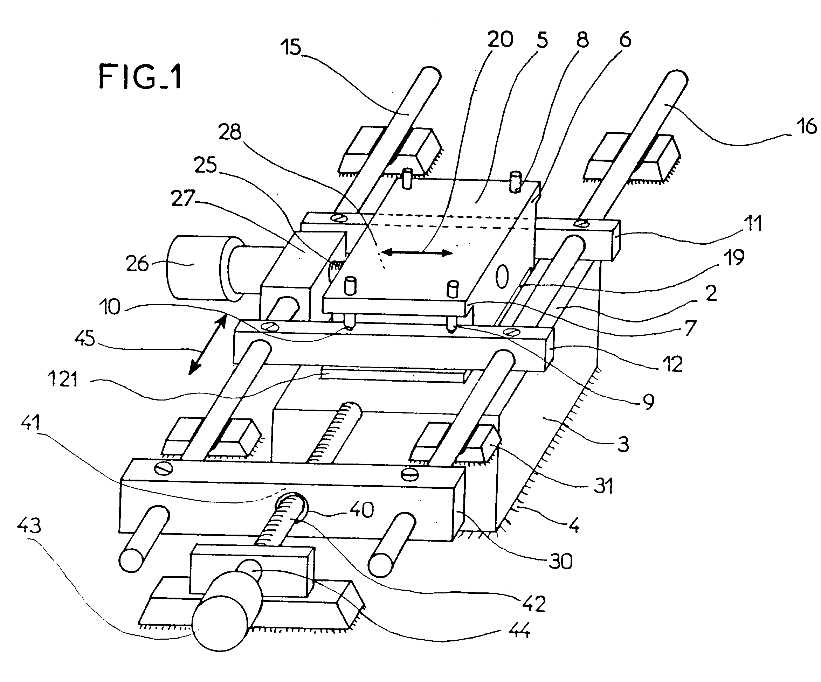

Sur la figure 1, on voit le dispositif selon l'invention. Ce dispositif est essentiellement constitué d'une surface de référence **2** qui est la face supérieure d'un bloc de marbre **3** en diabase, en granit ou en fonte stabilisée, lui-même reposant, de façon isostatique, sur un bâti **4**. Le plan de référence est rectifié et rodé sur toute sa surface, mais on définit une surface utile, située au centre, de façon à prendre en compte l'incertitude de planëité des bords engendrés par le rodage. Ainsi, pour une surface totale de 220mm x220mm, seule la surface centrale de 200mm x 200mm est utilisée.

Sur cette surface **2** est disposé le support mobile **5**. Celui-ci est constitué d'un bloc parallélépipédique de dimensions inférieures à celles du bloc de référence, dont la partie supérieure est débordante pour réaliser deux ailes **6**,**7**. Ces dernières sont munies, de façon solidaire, de vérins tels que **8**, réglables quant à l'effort qu'ils peuvent exercer par leurs extrémités libres **9**, par ailleurs munies chacune d'un moyen de roulement tel qu'une bille **10**, une butée à billes ou un roulement à billes pour les fortes pressions. Ces billes roulent sur des glissières **11**, **12** orientées parallèlement aux côtés du bloc portant les ailes. Ces glissières sont fixées sur deux tiges coulissantes **15** et **16**. L'écartement de ces deux glissières est légèrement inférieur à la largeur du support mobile pris dans une direction perpendiculaire à celle des ailes, de façon que le support soit légèrement précontraint dans sa limite élastique, annulant ainsi les jeux dans la direction perpendiculaire à celle du déplacement.

Deux contre-glissières **111** et **121**, situées à faible distance de la face inférieure des glissières **11** et **12**, empêchent le basculement de la table lors des manipulations manuelles pour le montage des capteurs.

De façon à assurer un frottement minimum, le support mobile est muni, latéralement, de pistons à billes 18 rappelés contre les glissières par un ressort, blocable en position par vis de pression. La bille peut être remplacée par un matériau à faible coefficient de frottement, généralement à base de polytétrafluoroéthylène et ses dérivés chargés ou non, plus particulièrement le matériau commercialisé sous la dénomination TURCITE. Dans cette application, on utilisera de la TURCITE chargée en bronze.

A sa partie inférieure, le support mobile est muni d'une plaque **19** de TURCITE également, mais chargée en graphite pour un meilleur glissement sur le marbre.

Cette disposition permet à la table de mieux reposer sur sa référence et d'éliminer tout bridage latéral, d'où la possibilité d'obtenir un alignement parfait de la table avec l'axe moteur-vis au montage; d'autant que le support mobile **5** est également alésé en son centre, suivant une direction parallèle à celle des glissières **11**, **12** et donc parallèle à la direction de glissement indiquée par la double flèche **20** ; cet alésage autorisant le passage libre de la vis filetée **25** solidaire de l'axe du moteur **26**, de même diamètre que celui de la vis fixée sur un support **27**, lui-même bloqué sur la tige **15**.

L'ensemble support mobile **5**, support **27** réglable en position, accouplement, sortie de réducteur, vis et écrou permet d'obtenir un alignement rigoureux de l'axe du moteur et de la vis pour assurer leur concentricité et éviter le battement axial de la vis, cause d'incertitude de position.

Le support mobile est muni d'un écrou auto-alignant avec ou sans rattrapage de jeu **28**. Cet écrou, commercialisé sous la dénomination GEMTO, est constitué de deux écrous, pour lesquels un mouvement oscillant relatif est permis. Cette vis de déplacement est à un ou plusieurs filets triangulaires. Elle est cémentée, trempée, rectifiée et de faible diamètre. En effet, la vitesse de glissement périphérique des filets est faible et ceci est rendu possible par l'effort de traction faible, résultant du faible coefficient de friction existant entre le support mobile et le marbre.

Le moteur **26** est un moteur électrique pas à pas, dont le réducteur est d'un type particulier dit "HARMONIC DRIVE". Le réducteur est composé d'un pignon déformable, roulant par déformation élastique sans jeu sur un engrenage à denture intérieure. Par cette déformation élastique du pignon, il y a toujours trois à quatre dents en prise dans le couple pignon-roue, ce qui conduit à un lissage moyen des erreurs angulaires de position des vis de déplacement et, par voie de conséquence, des erreurs de position du support mobile dans le plan **X-Y**.

Les tiges **15**, **16** sont reliées à leurs extrémités par un joug **30** et elles sont supportées et guidées par quatre paliers **31**, fixés sur le bâti **4**.

Le joug **30** est alésé en son milieu en **40** et muni également d'un écrou auto-alignant **41** dans lequel se monte une vis **42** ; ce montage étant identique au précédent. Un moteur électrique pas à pas **43** entraîne cette vis **42** par réducteur à engrenages réducteur **44** interposé ou non. Ce moteur **43** est fixé directement sur le bâti **4**. Les sens de déplacement, par cette deuxième motorisation, sont symbolisés par ta double flèche **45**.

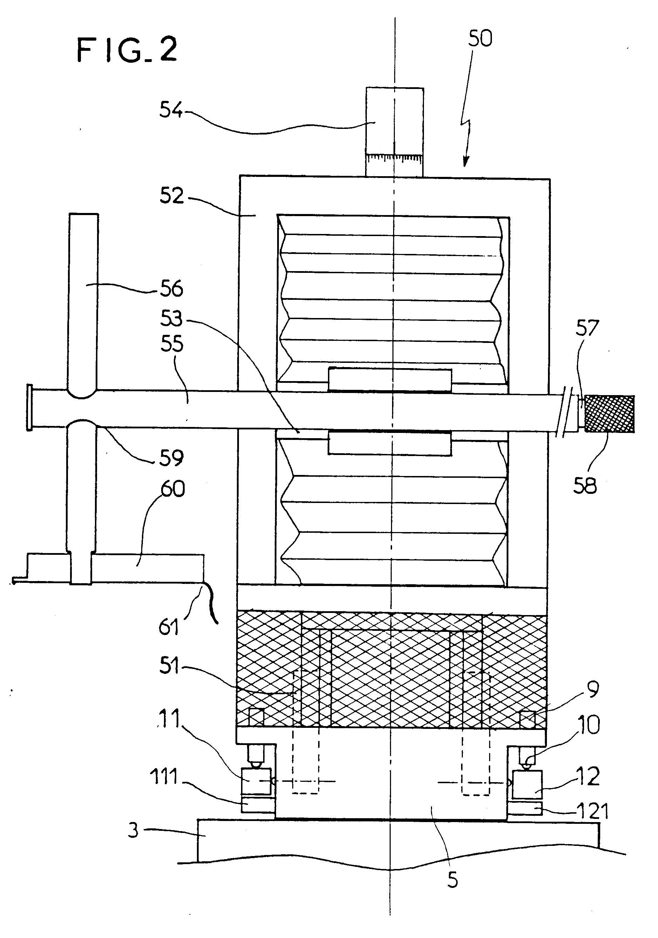

A La figure 2, on a représenté un accessoire pouvant être mis en place sur le support mobile **5**. Il s'agit d'une table à avance micrométrique **50**. La table est fixée en **51** au support mobile **5**. Cette table est constituée d'un cadre **52** dans lequel coulisse, suivant l'axe **Z** perpendiculaire au plan de référence **X-Y**, un index **53**. Ce dernier est entraîné par le système vis écrou **54** d'un moteur pas à pas ramené à la partie inférieure pour abaisser le centre de gravité du système. Cet index est, à son tour, porteur d'une tige cylindrique **55**, à l'extrémité de laquelle est fixée une deuxième tige cylindrique **56**, orientée perpendiculairement à la première. Une tige interne **57** assure, par le vissage de la molette **58**, le déplacement de la deuxième tige cylindrique par rapport à la première, ce qui conduit au blocage de la tige cylindrique **56** dans l'alésage **59** réalisé dans les tiges cylindriques **57** et **55**. Les tiges **55** et **56** sont réalisées en matériau composite pour être anti-vibration.

La tige verticale **56** porte, à son extrémité inférieure, un capteur **60** qui, en fonction des besoins, pourra être choisi pour le mesurage dimensionnel, à lecture optique, à écoulement fluide ou thermique. Ce capteur est relié en **61** à une unité de traitement et de mémorisation des résultats mesurés. Le capteur peut être remplacé par un outil pour réaliser des micro-gravures.

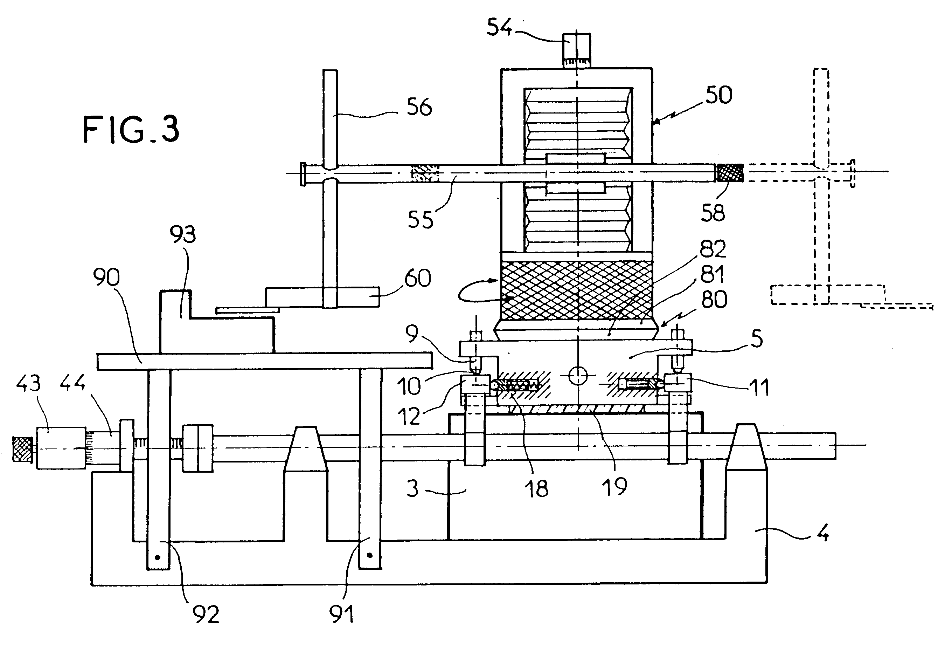

On voit, sur la figure 3, une vue latérale d'un dispositif selon l'invention, tel que représenté fig.1, équipé d'une table à avance micrométrique, telle que représentée en fig.2.

Il peut être complété par une platine orientable **80**, dont une partie **81** est solidaire de la table **50** et l'autre **82** solidaire du support mobile **5**. Le bâti support **4** est réalisé en fonte stabilisée à 44°C après ébauche d'usinage, il est constitué d'un caisson nervuré qui repose par des appuis situés sous les nervures. Sa forme est étudiée pour être fabriqué par moulage sans noyau. Il est prévu, sur le bâti, de fixer les pieds **91**,**92** d'une table **90** en profilé d'aluminium comportant des rainures de fixation des pièces **93**. Cette table peut être fixe, ou rendue mobile par adjonction d'une motorisation adéquate (non représentée).

La table porte-pièces, tout comme l'ensemble du bâti, peuvent également être isolés des vibrations parasites extérieures par des amortisseurs connus en soi.

On va maintenant décrire le fonctionnement d'un tel dispositif suivant le procédé selon l'invention.

Le procédé consiste à étalonner les vérins **8** et à exercer, par leur intermédiaire, sur les glissières **11** et **12**, des efforts individuels tels que la somme de ces efforts soit légèrement inférieure à celui exercé par le poids du support mobile et de ses accessoires.

La pression à l'interface support mobile-surface de référence est réduite, ce qui permet d'obtenir un déplacement régulier de très haute précision, en amenant l'effort de départ voisin de l'effort de glissement et en limitant ainsi les écarts de position géométrique, compte-tenu des autres éléments de précision introduits dans la chaîne mécanique.

Le matériau antifriction a aussi pour rôle d'absorber les vibrations parasites.

Dans son application aux mesures profilométriques tridimensionnelles, un palpeur profilométrique de contact peut explorer une surface de forme quelconque à l'aide du procédé de large échelle de Monsieur le Professeur Jean Mignot.

Les caractéristiques des mesures sont alors liées à la qualité du capteur et au pouvoir de séparation du palpeur.

Les mesures se déroulent de la façon suivante, le but étant de déterminer les écarts géométriques du type: écarts de forme, ondulation, rugosité.

Les mesures sont effectuées, en espacement, suivant les directions de captage **X** et **Y** et, en profondeur, suivant la direction **Z**. Le palpeur d'exploration est donc amené au contact de la surface à contrôler, dans sa plage de mesure, par la table **50** sous l'impulsion du moteur pas à pas. Le moteur est alors arrêté et le palpeur s'immobilise. On met en marche l'un des deux moteurs **26** ou **43** pour faire effectuer au palpeur une translation suivant l'une des directions **X** ou **Y**, ou les deux moteurs simultanément pour parcourir une trajectoire paramétrée, exemple circulaire (pour les portées de joints). Simultanément, on enregistre les variations détectées par le palpeur à l'aide d'une unité de traitement et de mémorisation. Lorsque le capteur arrive en **Z** en limite de sa plage de mesure, dans une première fenêtre, le déplacement en **X** ou **Y** est interrompu et, suivant le profil général de mesure, c'est-à-dire suivant que le capteur est arrivé en limite inférieure ou supérieure de la plage de mesure, la table fait effectuer au palpeur un microdéplacement vers le haut ou vers le bas. On contrôle à nouveau le profil dans une deuxième fenêtre. Ces étapes sont renouvelées jusqu'à couvrir toute la surface à contrôler. Le traitement informatique raccorde alors les fenêtres successives pour constituer le profil mesuré. Il est à noter que, dans cette méthode de la large échelle, la précision des mesures n'est pas fonction de l'incertitude de déplacement en **Z**, mais seulement de la précision du capteur.

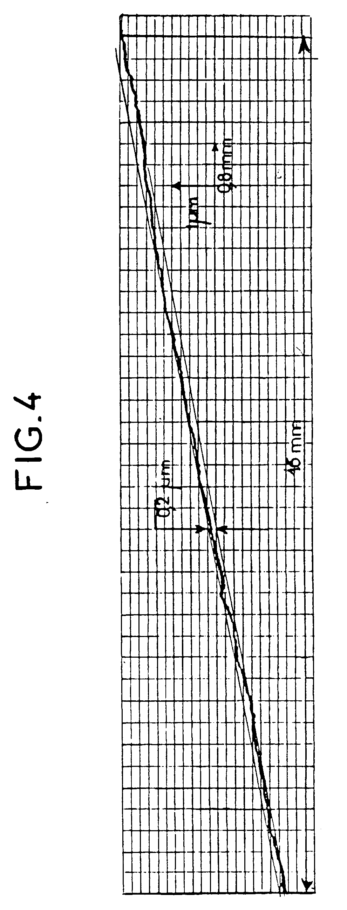

Toutes ces étapes sont pilotées par l'unité de traitement de manière connue et le résultat obtenu est représenté suivant un exemple particulier à la figure 4.

La précision est de 0,2 micromètre, en moyenne, sur une longeur de 16mm. La pente générale de la courbe est due au décalage de parallélisme entre le plan de la surface à contrôler et la surface de référence, ce qui n'influe pas sur la précision obtenue. Le positionnement du profil mesuré dans le système d'axe est facilement réalisé par traitement, en calculant la droite des moindres carrés du profil mesuré et, en la replaçant parallèlement à l'axe des **X**, on replace le profil mesuré de la même manière, et, par ailleurs, on constate que la mesure, selon ce procédé, est indépendante de la précision de déplacement suivant l'axe **Z**.

Pour la très haute précision et la micro-rugosité, le capteur peut être muni d'un patin reposant sur une surface de référence posée sur la pièce. La profondeur des irrégularités de la surface à explorer est alors évaluée par rapport à cette référence, le capteur étant toujours mis en mouvement par les déplacements en **X** et en **Y** et mis en position suivant **Z** par le procédé de la large échelle. Dans ce cas, les incertitudes de position géométrique du palpeur sont inférieures à 0,05 micromètre.

Par traitement des courbes obtenues selon les deux axes **X**, **Y** mises côte à côte, on obtient une image tridimensionnelle. Ainsi, l'image des profondeurs peut être anamorphosée différemment suivant **X**,**Y** ou **Z**, ce qui conduit au choix d'un traitement de surface ultérieur adapté.

L'invention n'est pas limitée à l'application qui vient d'être indiquée, mais elle comprend les améliorations accessibles à l'homme du métier.

C'est ainsi que la tige interne porte capteur peut être revêtue intérieurement d'un matériau anti-vibrations, qui peut, d'ailleurs, assurer le contrepoids du capteur.

Les applications sont très larges, puisque le procédé pour obtenir un glissement de grande précision, parfaitement régulier, est applicable à la mesure profilométrique mais, également, à la mesure dimensionnelle, au transport d'une pièce, ou au déplacement d'un outil.

De même, au lieu d'un palpeur à aiguille, on peut utiliser un palpeur à touche, monté sur un capteur de grande course, afin de ne s'intéresser qu'à la forme des pièces.

Toujours selon l'invention, il est possible de réaliser une table déchargée axiale.

De la même façon que le coussin d'air dans les translations, le palier à air peut être une gêne dans certaines applications par les vibrations inhérentes qu'il engendre dues à l'élasticité du film d'air.

Ce type de table axiale déchargée trouve une application toute particulière pour remplacer les tours verticaux de haute précision à palier d'air en milieux exposés au vibrations.

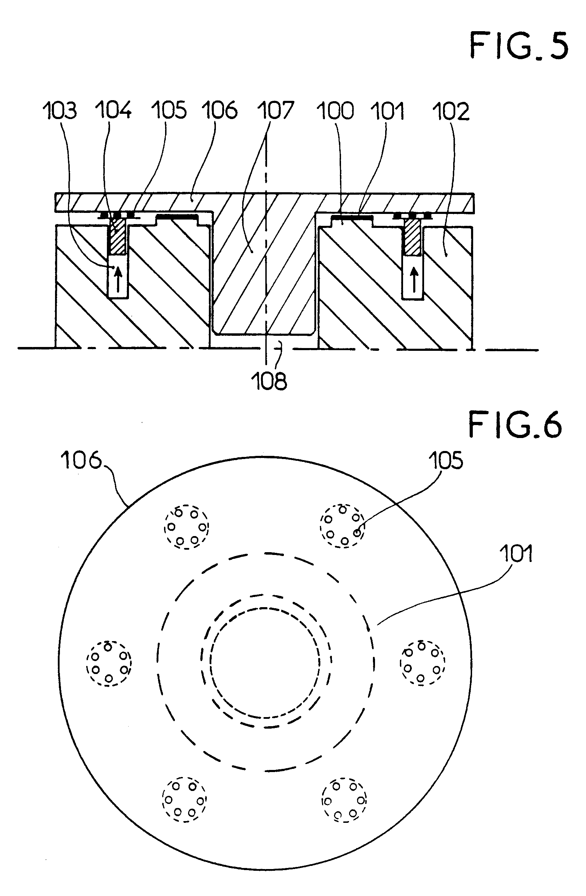

Sur les figures 5 et 6, on voit une table déchargée axiale.

La surface de référence **100** possède un revêtement en matériau antifriction **101** à la partie supérieure du bâti **102**. Dans ce bâti sont ménagés des alésages non débouchants **103**, dans lesquels coulissent des pistons **104**, réalisant ainsi des vérins qui pourront, comme dans la variante principale, être alimentés en air ou autre fluide, voire être remplacés par des moyens élastiques tels que des ressorts.

Ces vérins comportent, à leurs extrémités, des billes **105**, de façon à laisser tourner le plateau proprement dit **106** qui est, par ailleurs, centré par son axe **107** dans un alésage **108** du bâti. Le centrage pourrait avantageusement être magnétique. Les vérins de décharges peuvent aisément être remplacés par un système à compensation magnétique. Ils sont, par ailleurs, disposés à secteur angulaire constant pour assurer une décharge isostatique; ils pourraient l'être suivant des cercles concentriques.

Quant au procédé, on comprend qu'il puisse être mis en oeuvre en mettant en place le dispositif directement sur la pièce à contrôler, grâce, notamment, à la rotation de l'accessoire représenté en traits pointillés sur la figure 3.

Le support mobile est repérable visuellement en position dans la limite de ses déplacements. Un index **X** repère, sur une régle graduée, la position en **X** du mobile.

Un index **Y** repère, sur une régle graduée, la position en **Y** du mobile.

La table **Z** posséde un index de repérage en **Z**.

Chaque fin de course **X** et **Y** du mobile est limitée par un micro-rupteur qui arrête la rotation du moteur pas à pas ; il en est de même en **Z**.

Le support mobile, en butée sur un micro-rupteur, ne peut alors que repartir pour le dégager.

Les micro-rupteurs ne se déplacent pas avec le mobile, ce qui évite le déplacement de câbles électriques.

## Revendications

1. Dispositif permettant le déplacement par glissement, sur une surface de référence, d'un support mobile pouvant recevoir des accessoires tels qu'une pièce, un capteur ou un outil, et d'exercer, sur ce support mobile, des efforts répartis, orientés de bas en haut, caractérisé en ce que le support mobile (**5**) prend appui, par l'intermédiaire de vérins (**8**) et de moyens de roulement ou de glissement (**10**), sur la face supérieure de glissières mobiles (**11, 12**), en ce que ce support mobile (**5**) comporte, sur sa face inférieure, au moins une plaque (**19**) à faible valeur de coefficient de frottement, autolubrifiant, résistant à l'usure et pouvant subir un usinage de précision, venant en appui sur la surface de référence (**2**), et en ce qu'il comporte latéralement des dispositifs d'alignement et de guidage réglables, prenant appui contre les glissières mobiles (**11, 12**).

2. Dispositif selon la revendication 1, caractérisé en ce que le support mobile (**5**) est légèrement précontraint, dans la limite élastique, entre les faces internes des glissières (**11, 12**).

3. Dispositif selon la revendication 1, caractérisé en ce que les dispositifs d'alignement et de guidage latéraux sont constitués de pistons à billes (**18**), rappelés par un ressort, avec blocage par une vis de pression.

4. Dispositif selon la revendication 1, caractérisé en ce que le patin (**19**) est réalisé en polytétrafluoroéthylène, ou l'un de ses dérivés, chargés ou non.

5. Dispositif selon la revendication 1, caractérisé en ce que le support mobile (**5**) comporte, suivant une direction parallèle aux glissières rectilignes (**11, 12**), un alésage muni d'un écrou fixe auto-alignant, avec ou sans rattrapage de jeu (**28**).

6. Dispositif selon la revendication 1, caractérisé en ce que le déplacement du support mobile (**5**) est obtenu par l'intermédiaire d'au moins un moteur (**26**), solidaire des glissières rectilignes (**11, 12**), d'une vis (**25**) et d'un écrou (**28**).

7. Dispositif selon la revendication 6, caractérisé en ce que la vis (**25**), de faible diamètre, comporte un filet, ou plusieurs filets, à profil triangulaire, cémenté, trempé et rectifié.

8. Dispositif selon la revendication 1, caractérisé en ce que la surface de référence (**2**) est la face supérieure d'un bloc de marbre (**3**) en diabase, en granit ou en fonte stabilisée rectifiée, ce bloc reposant isostatiquement sur trois appuis solidaires du (**4**).

9. Dispositif selon la revendication 1, caractérisé en ce que, sur le support mobile (**5**), est fixée une table (**50**), à avance micrométrique par vis et moteur pas à pas, dont la direction de déplacement **Z** est perpendiculaire au plan de la surface de référence.

10. Dispositif selon la revendication 9, caractérisé en ce que l'index (**53**) de la table (**50**) porte une tige cylindrique (**55**) support de capteur (**60**) ; cette tige étant orientée perpendiculairement aux glissières rectilignes (**11, 12**).

11. Dispositif selon la revendication 9, caractérisé en ce qu'entre le support mobile (**5**) et la table à avance micrométrique (**50**) est interposée une platine orientable (**80**).

12. Dispositif selon la revendication 10, caractérisé en ce que la tige support (**55**) porte une tige de blocage (**57**) à revêtement interne absorbant les vibrations.

13. Dispositif selon la revendication 1, caractérisé en ce que les glissières rectilignes (**11, 12**) sont solidaires des tiges (**15, 16**), d'un moyen de translation comprenant un moteur (**43**), un réducteur (**44**), une vis (**42**), un joug (**30**) et un écrou auto-alignant (**41**).

14. Dispositif selon la revendication 6 ou 13, caractérisé en ce que les moteurs (**26, 43**) sont des moteurs électriques pas à pas, comprenant un entraînement du type "Harmonic Drive" ou un réducteur à engrenages.

15. Dispositif selon la revendication 1, caractérisé en ce que le support mobile est un plateau tournant (**106**), glissant sur des surfaces de référence (**100**) revêtues d'un matériau antifriction (**101**), déchargé par des vérins à piston (**104**) coulissant dans des alésages (**103**) usinés dans le bâti support (**102**), ces pistons étant munis, à leur extrémité supérieure, d'une bille (**105**) ; le plateau (**106**) étant centré dans un alésage (**108**) du bâti (**102**).

16. Procédé d'application du dispositif selon les revendications 1 à 15 aux mesures profilométriques, caractérisé en ce qu'il consiste à :
- étalonner les vérins (**8**),
- exercer, sur la face supérieure des glissières mobiles (**11, 12**), par l'intermédiaire des vérins (**8**) et des moyens de roulement ou de glissement (**10**), les efforts répartis et orientés de bas en haut, de façon que la somme de ces efforts soit inférieure au poids de l'ensemble constitué du support mobile (**5**) et de ses accessoires,
- maintenir en appui le support mobile (**5**) sur la surface de référence (**2**), de façon que le dit support mobile (**5**) exerce un minimum de pression sur la dite surface de référence (**2**), par l'intermédiaire d'au moins une plaque (**19**) située sur la face inférieure du support mobile (**5**) ,
- régler les dispositifs d'alignement latéraux, de façon que ceux-ci prennent appui contre les glissières mobiles,
- mesurer par rapport à la surface de référence (**2**), suivant l'axe **(Z)**, la profondeur des profils d'une surface, suivant une direction **(X)** ou **(Y)** ou **(X, Y)**, à l'aide d'un capteur dimensionnel à lecture optique, à écoulement fluide, inductif ou capacitif, monté sur une table à avance micrométrique, elle-même solidaire du support mobile, pour chiffrer la valeur des paramètres qui caractérisent les profils des irrégularités géométriques de surface mesurées en fonction de leur ordre de grandeur, forme, ondulation, rugosité et microrugosité d'une pièce, en adaptant les déplacements en fonction des opérations à effectuer.

17. Procédé selon la revendication 16, caractérisé en ce que, pour les pièces de grandes dimensions, les mesurages sont effectuées en plaçant le dispositif directement sur la pièce à contrôler.

18. Procédé selon la revendication 16, caractérisé en ce que, dans le cas d'un support mobile tournant, on effectue le déplacement de celui-ci par glissement sur une surface de référence annulaire, de façon que les efforts répartis soient exercés de bas en haut, à secteur annulaire constant, sur un ou plusieurs cercles concentriques, de façon à assurer une décharge isostatique.

## Claims

1. Device allowing the displacement by sliding, on a reference surface, of a mobile support which can receive accessories such as a workpiece, a sensor or a tool, and the exertion on this mobile support of distributed pressures directed from the bottom upwards, characterized in that the mobile support (5) rests, by means of jackscrews (8) and rolling or sliding means (10), on the upper surface of the mobile slides (11, 12), in that this mobile support (5) comprises, on its lower face, at least one plate (19) with a low friction coefficient value, self-lubricating, wear-resistant and able to be subjected to precision machining, resting on the reference surface (2), and in that it comprises at its sides adjustable alignment and guiding devices, resting against the mobiles slides (11, 12).

2. Device according to claim 1, characterized in that the mobile support (5) is slightly prestressed, within the limit of elasticity, between the inner surfaces of the slides (11, 12).

3. Device according to claim 1, characterized in that the side alignment and guiding devices are constituted by spring-loaded ball pistons (18), locked by a locking screw.

4. Device according to claim 1, characterized in that the plate (19) is made of polytetrafluoroethylene, or one of its derivatives, loaded or not.

5. Device according to claim 1, characterized in that the mobile support (5) comprises, in the direction parallel to the rectilinear slides (11, 12), a bore provided with a self-aligning fixed nut, with or without play adjustment (28).

6. Device according to claim 1, characterized in that the displacement of the mobile support (5) is obtained by means of at least one motor (26), integral with the rectilinear slides (11, 12), of a screw (25) and a nut (28).

7. Device according to claim 6, characterized in that the screw (25), which has a small diameter, comprises a thread or several threads, a triangular profile, case-hardened and precision ground.

8. Device according to claim 1, characterized in that the reference surface (2) is the upper surface of a block of marble (3), diabase, granite or ground stress-relieved cast iron, this block resting isostatically on three supports which are integral with the frame (4).

9. Device according to claim 1, characterized in that a table (50) with micrometric movement by screw and stepping motor is fixed on the mobile support (5), the direction of displacement Z of which is perpendicular to the plane of the reference surface.

10. Device according to claim 9, characterized in that the index (53) of the table (50) carries a cylindrical rod (55) supporting a sensor (60), this rod being orientnted perpendicularly to the rectilinear slides (11, 12).

11. Device according to claim 9, characterized in that an adjustable plate (80) is interposed between the mobile support (5) and the table with micrometric movement (50).

12. Device according to claim 10, characterized in that the support rod (55) carries a locking rod (57) with internal sheathing to absorb vibrations.

13. Device according to claim 1, characterized in that the rectilinear slides (11, 12) are integral with the rods (15, 16), of a translation means comprising a motor (43), a reduction gear (44), a screw (42), a yoke (30) and a self-aligning screw (41).

14. Device according to claim 6 or 13, characterized in that the motors (26, 43) are electric stepping motors, containing a "Harmonic Drive" type drive or a geared reducer.

15. Device according to claim 1, characterized in that the mobile support is a revolving plate (106), sliding on the reference surfaces (100) coated with an anti-friction material (101), the weight being taken by the piston jacks (104) sliding in the bores (103) machined in the support frame (102), these pistons being provided at their upper end with a ball (105); the plate (106) being centred in a bore (108) of the frame (102).

16. Procedure for use of the device according to claims 1 to 15 for profilometric measurements, characterized in that it consists of:
- calibrating the jackscrews (8),
- exerting, on the upper surface of the mobile slides (11, 12) by means of the jackscrews (8) and the means of rolling or sliding (10), distributed pressures directed from the bottom upwards, in such a way that the sum of these pressures is less than the weight of the assembly constituted by the mobile support (5) and its accessories,
- maintaining the mobile support (5) resting on the reference surface (2), so that the said mobile support (5) exerts a minimum pressure on the said reference surface (2), by means of at least one plate (19) situated on the lower face of the mobile support (5),
- adjusting the lateral alignment devices so that they rest against the mobile slides,
- measuring, relative to the reference surface (2) following the axis (Z), the depth of the profiles of a surface, following a direction (X) or (Y) or (X,Y) using a dimensional sensor, with optical scanner, with fluid, inductive or capacitive movement, mounted on a table with micrometric movement, itself integral with the mobile support, to assess the value of the parameters which characterize the profiles of the surface geometric irregularities measured as a function of their order of magnitude, form, undulation, roughness and microroughness of a workpiece, by adjusting the displacements as a function of the operations to be carried out.

17. Process according to claim 16, characterized in that for large-sized workpieces, the measurements are carried out by placing the device directly on the workpiece to be checked.

18. Process according to claim 16, characterized in that in the case of a revolving mobile support, the displacement of the latter is carried out by sliding on an annular reference surface, so that the distributed pressures are exerted from the bottom upwards, by constant annular sector, over one or more concentric circles, so as to ensure that the weight is taken isostatically.

## Patentansprüche

1. Vorrichtung, die es ermöglicht, einen beweglichen Träger, der Zubehör wie ein Teil, einen Meßfühler oder ein Werkzeug aufnehmen kann, auf einer Bezugsfläche durch Gleiten zu verschieben und auf diesen beweglichen Träger verteilte Kräfte, die von unten nach oben gerichtet sind, auszuüben**, dadurch gekennzeichnet,** daß der bewegliche Träger (5) mittels der Justierschrauben (8) und Roll- oder Gleiteinrichtungen (10) auf der Oberseite der beweglichen Führungsbahnen (11, 12) abgestützt wird, daß dieser bewegliche Träger (5) auf seiner Unterseite wenigstens eine selbstschmierende, verschleißbeständige Platte (19) mit einem niedrigen Reibungskoeffizienten enthält, die präzisionsbearbeitet ist und auf der Bezugsfläche (2) aufliegt, und daß er an der Seite einstellbare Ausrichtungs- und Führungseinrichtungen, die sich an den beweglichen Führungsbahnen (11, 12) abstützen, umfaßt.

2. Vorrichtung nach Anspruch 1, **dadurch gekennzeichnet,** daß der bewegliche Träger (5) innerhaib der Elastizitätsgrenze zwischen den Innenseiten der Führungsbahnen (11, 12) leicht vorgespannt ist.

3. Vorrichtung nach Anspruch 1, **dadurch gekennzeichnet,** daß die seitlichen Ausrichtungs- und Führungseinrichtungen aus Kugelkolben (18), die mittels einer Feder angedrückt und durch eine Druckschraube arretiert werden, bestehen.

4. Vorrichtung nach Anspruch 1, **dadurch gekennzeichnet,** daß die Platte (19) aus verstärktem oder unverstärktem Polytetrafluorethylen oder -derivat hergestellt ist.

5. Vorrichtung nach Anspruch 1, **dadurch gekennzeichnet,** daß der bewegliche Träger (5) in einer zu den geraden Führungsbahnen (11, 12) parallelen Richtung eine Bohrung enthält, die mit einer selbstzentrierenden feststehenden Mutter mit oder ohne Spieleinstellung (28) versehen ist.

6. Vorrichtung nach Anspruch 1, **dadurch gekennzeichnet,** daß das Verschieben des beweglichen Trägers (5) mittels wenigstens eines Motors (26) durchgeführt wird, der mit den geraden Führungsbahnen (11, 12), einer Schraube (25) und einer Mutter (28) fest verbunden ist.

7. Vorrichtung nach Anspruch 6, **dadurch gekennzeichnet,** daß die Schraube (25) einen kleinen Durchmesser hat und einen oder mehrere Spitzgewindegänge, die einsatzgehärtet, abgeschreckt und maßgeschliffen sind, aufweist.

8. Vorrichtung nach Anspruch 1, **dadurch gekennzeichnet,** daß die Bezugsfläche (2) die Oberseite einer Grundplatte (3) aus maßgeschliffenem Diabas, Granit oder beruhigtem Gußeisen ist, wobei diese Grundplatte isostatisch auf drei Lagern ruht, die mit dem Grundrahmen (4) fest verbunden sind.

9. Vorrichtung nach Anspruch 1, **dadurch gekennzeichnet,** daß auf dem beweglichen Träger (5) ein Meßtisch (50) befestigt ist, dessen Mikrometervorschub durch einen Schrittmotor bewirkt wird und dessen Bewegungsrichtung z senktecht zur Ebene der Bezugsfläche steht.

10. Vorrichtung nach Anspruch 9, **dadurch gekennzeichnet,** daß die Rasteinrichtung (53) des Meßtisches (50) eine zylindrische Spindel (55) trägt, die den Meßfühler (60) hält, wobei diese Spindel quer zu den geraden Führungsbahnen (11, 12) ausgerichtet ist.

11. Vorrichtung nach Anspruch 9, **dadurch gekennzeichnet,** daß zwischen dem beweglichen Träger (5) und dem Meßtisch mit Mikrometervorschub (50) eine drehbare Unterlegplatte (80) eingefügt ist.

12. Vorrichtung nach Anspruch 10**, dadurch gekennzeichnet,** daß die Haltespindel (55) eine Arretierspindel (57) mit schwingungsabsorbierender Innenbeschichtung enthält.

13. Vorrichtung nach Anspruch 1, **dadurch gekennzeichnet,** daß die geraden Führungsbahnen (11, 12) mit den Stäben (15, 16) und einer Antriebseinrichtung fest verbunden sind, die einen Motor (43), eine Untersetzung (44), eine Schraube (42), ein Joch (30) und eine selbstzentrierende Mutter (41) umfaßt.

14. Vorrichtung nach Anspruch 6 oder 13, **dadurch gekennzeichnet,** daß die Motoren (26, 43) Elektroschrittmotoren sind, die einen Oberwellenerregungsantrieb oder eine Zahnraduntersetzung enthalten.

15. Vorrichtung nach Anspruch 1, **dadurch gekennzeichhet,** daß der bewegliche Träger ein Drehteller (106) ist, der auf den mit einem Gleitmaterial (101) beschichteten Bezugsflächen (100) gleitet und auf Justierzylinderkolben (104), die sich in den Bohrungen (103), welche in die Grundplatte (102) eingearbeitet sind, hin und her bewegen, gelagert ist, wobei diese Kolben an ihrem oberen Ende mit einem Kugellager (105) ausgestattet sind und der Teller (106) in einer Bohrung (108) der Grundplatte (102) zentriert ist.

16. Verfahren zur Verwendung der Vorrichtung nach den Ansprüchen 1 bis 15 für Oberflächenmessungen, **dadurch gekennzeichnet,** daß es aus folgenden Schritten besteht:
- Kalibrieren der Justierschrauben (8),
- Ausüben von von unten nach oben gerichteter, verteilter Kräfte mittels Justierschrauben (8) und Roll- oder Gleiteinrichtungen (10) auf die Oberseite der beweglichen Führungsbahnen (11, 12), derart, daß die Summe dieser Kräfte kleiner als das Gewicht der gesamten Baugruppe ist, die aus dem beweglichen Träger (5) und seinem Zubehör besteht,
- Abstützen des beweglichen Trägers (5) auf der Bezugsfläche (2) derart, daß dieser bewegliche Träger (5) einen minimalen Druck auf diese Bezugsflache (2) mittels wenigstens einer Platte (19) ausübt, die sich auf der Unterseite des beweglichen Trägers (5) befindet,
- Einstellen der seitlichen Ausrichtungseinrichtungen derart, daß sie sich an den beweglichen Führungsbahnen abstützen, und
- Messen der Profiltiefe einer Oberfläche in der z-Richtung und in einer x- oder y-Richtung oder einer x-, y-Richtung gegen die Bezugsfläche (2) mittels eines geometrischen Meßfühlers mit optischer Anzeige und induktiver oder kapazitiver fließender Übertragung, der auf einem Meßtisch mit Mikrometervorschub befestigt ist, welcher seinerseits mit dem beweglichen Träger fest verbunden ist, zur Bestimmung der Parameter, welche die Profile der geometrischen Oberflächenunregelmäßigkeiten beschreiben, die in Abhängigkeit von der Größenordnung von Größe, Form, Welligkeit, Rauhtiefe und Mikrorauhtiefe eines Teils unter Anwendung des Verschiebens, in Abhängigkeit von den auszuführenden Arbeitsgängen gemessen werden.

17. Verfahren nach Anspruch 16, **dadurch gekennzeichnet,** daß bei Teilen großer Abmessungen die Messungen derart durchgeführt werden, daß die Vorrichtung direkt auf dem zu prüfenden Teil angebracht wird.

18. Verfahren nach Anspruch 16, **dadurch gekennzeichnet,** daß bei einem drehbaren beweglichen Träger seine Verschiebung durch Gleiten auf einer ringförmigen Bezugsfläche mit konstantem Ringquerschnitt derart durchgeführt wird, daß die von unten nach oben gerichteten verteilten Kräfte auf einen oder mehrere konzentrische Kreise ausgeübt werden, so daß eine isostatische Lagerung sichergestellt ist.
